# EUROPEAN PATENT SPECIFICATION

(11) **EP 4 169 344 B1**
(45) Date of publication and mention of the grant of the patent: **20.05.2026**
(21) Application number: 21734520.6
(22) Date of filing: 16.06.2021
(51) Int. Cl.: H04W 74/0808, H04W 74/00

(54) **CHANNEL OCCUPANCY TIME SHARING**
GEMEINSAME NUTZUNG DER KANALBELEGUNGSZEIT
PARTAGE DE TEMPS D'OCCUPATION DE CANAL

(30) Priority: 17.06.2020 US 202063040386 P
(43) Date of publication of application: 26.04.2023
(73) Proprietor: Lenovo (Singapore) Pte. Ltd., Singapore 556741 (SG)
(72) Inventor: GANESAN, Karthikeyan, 64569 Nauheim (DE); GOLITSCHEK EDLER VON ELBWART, Alexander Johann Maria, 64285 Darmstadt (DE)
(74) Representative: Openshaw & Co.
(86) International application number: PCT/IB2021/055337
(87) International publication number: WO 2021/255673

(56) References cited:
- EP-A1- 3 817 428
- WO-A1-2020/024854
- WO-A1-2020/033721
- US-A1- 2020 187 250

## Description

### CROSS-REFERENCE TO RELATED APPLICATIONS

This application claims priority to United States Patent Application Serial Number 63/040,386 entitled "APPARATUSES, METHODS, AND SYSTEMS FOR A NR SIDELINK UNLICENSED OPERATION FOR COT SHARING" and filed on June 17, 2020 for Karthikeyan Ganesan.

### FIELD

The subject matter disclosed herein relates generally to wireless communications and more particularly relates to channel occupancy time sharing.

### BACKGROUND

In certain wireless communications networks, network devices, user equipments, and/or sidelink devices may be used. The times that such devices make transmissions may interfere with one another.

WO2020/033721A1 discloses receiver assisted channel access may be used during a channel occupancy time (COT). A wireless transmit/receive unit (WTRU) that is a member of a first group may receive a preamble in a first time slot set, and determine a group associated with the first time slot. On a condition that the group associated with the first time slot set is the first group, the WTRU may monitor the channel for a request-to-send (RTS) signal in the first slot set. On a condition that the RTS signal is received, the WTRU may perform listen-before-talk (LBT) on the channel. On a condition that the LBT is successful, the WTRU may transmit a clear-to-send (CTS) on the channel and access the channel in the first time slot. On a condition that the LBT is unsuccessful, the WTRU may not access the channel in the first time slot set.

US2020/187250A1 discloses wireless communications systems and methods related to constraining no-listen-before-talk (LBT)-based transmissions during link direction switches in a frequency spectrum shared by multiple network operating entities. A first wireless communication device, communicates, with a second wireless communication device, a configuration for determining whether to perform an LBT after a link direction switch. The first wireless communication device communicates, with the second wireless communication device, a first communication signal in a first link direction during a channel occupancy time (COT) period of the first wireless communication device or the second wireless communication device. The first wireless communication device communicates, with the second wireless communication device, a second communication signal in a second link direction different from the first link direction during the COT period based on the configuration.

WO2020/024854A1 discloses an electronic device comprising: a processing circuit configured to: generate, where a user equipment accesses an unauthorized frequency band successfully, an indication representing whether sharing a channel occupancy time of the user equipment with other user equipment is permitted; and send the indication to a base station or the other user equipment.

### BRIEF SUMMARY

Methods for channel occupancy time sharing are disclosed. The invention is defined by the appended independent claims.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for channel occupancy time sharing;
Figure 2 is a schematic block diagram illustrating one embodiment of an apparatus that may be used for channel occupancy time sharing;
Figure 3 is a schematic block diagram illustrating one embodiment of an apparatus that may be used for channel occupancy time sharing;
Figure 4 is a schematic block diagram illustrating one embodiment of gNB initiated COT sharing with UL and/or SL;
Figure 5 is a schematic block diagram illustrating one embodiment of UE initiated COT sharing with a gNB and other SL UEs;
Figure 6 is a schematic block diagram illustrating one embodiment of SL UE initiated COT sharing;
Figure 7 is a schematic block diagram illustrating one embodiment of SL COT sharing in a relay environment;
Figure 8 is a flow chart diagram illustrating one embodiment of a method for channel occupancy time sharing; and
Figure 9 is a flow chart diagram illustrating another embodiment of a method for channel occupancy time sharing.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

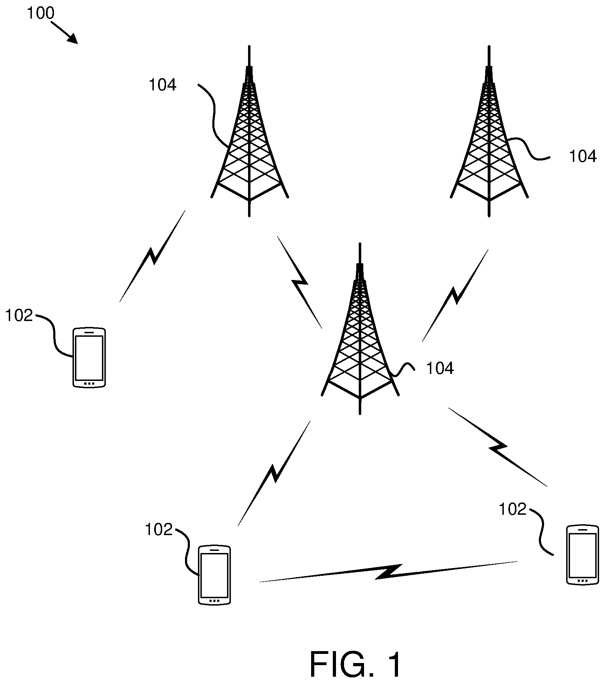

Figure 1 depicts an embodiment of a wireless communication system 100 for channel occupancy time sharing. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a network unit 104 may determine channel occupancy time sharing for at least one user equipment. In some embodiments, the network unit 104 may transmit information indicating the channel occupancy time sharing to the at least one user equipment. The channel occupancy time sharing indicates sharing information for at least one uplink communication, at least one sidelink communication, or a combination thereof. In certain embodiments, the network unit 104 may receive the at least one uplink communication, the at least one sidelink communication, or the combination thereof based on the channel occupancy time sharing. Accordingly, the network unit 104 may be used for channel occupancy time sharing.

In certain embodiments, a remote unit 102 (e.g., user equipment) may perform a listen-before-talk procedure. In some embodiments, the remote unit 102 may initiate channel occupancy time sharing for the user equipment based on the listen-before-talk procedure. The channel occupancy time sharing indicates sharing information for at least one uplink communication, at least one sidelink communication, or a combination thereof to be transmitted from the user equipment. In various embodiments, the remote unit 102 may transmit the at least one uplink communication, the at least one sidelink communication, or the combination thereof based on the channel occupancy time sharing. Accordingly, the remote unit 102 may be used for channel occupancy time sharing.

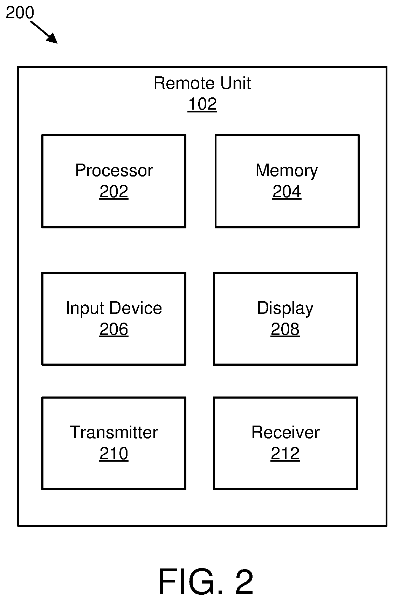

Figure 2 depicts one embodiment of an apparatus 200 that may be used for channel occupancy time sharing. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

The processor 202 may perform a listen-before-talk procedure; and initiate channel occupancy time sharing for the user equipment based on the listen-before-talk procedure. The channel occupancy time sharing indicates sharing information for at least one uplink communication, at least one sidelink communication, or a combination thereof to be transmitted from the user equipment. In various embodiments, the transmitter 210 may transmit the at least one uplink communication, the at least one sidelink communication, or the combination thereof based on the channel occupancy time sharing.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

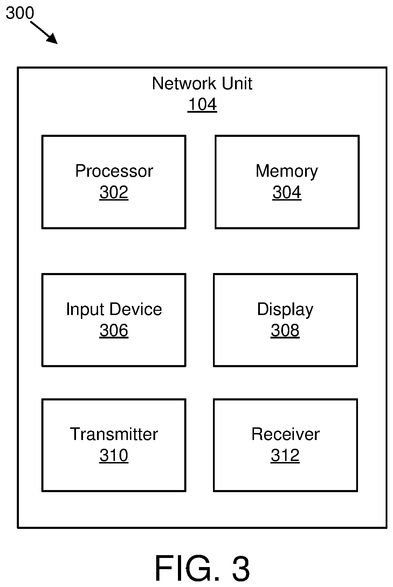

Figure 3 depicts one embodiment of an apparatus 300 that may be used for channel occupancy time sharing. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

The processor 302 may determine channel occupancy time sharing for at least one user equipment. In various embodiments, the transmitter 310 may transmit information indicating the channel occupancy time sharing to the at least one user equipment. The channel occupancy time sharing indicates sharing information for at least one uplink communication, at least one sidelink communication, or a combination thereof. In various embodiments, the receiver 312 may receive the at least one uplink communication, the at least one sidelink communication, or the combination thereof based on the channel occupancy time sharing.

In certain embodiments, the transmitter 310 may transmit information described herein and/or the receiver 312 may information described herein and/or the processor 302 may process information described herein.

In certain embodiments, sidelink ("SL") operations may be in an unlicensed and/or licensed shared access spectrum for industrial internet of things ("IIoT") and commercial use where channel access methodology may be based on frame based equipment ("FBE") or load based equipment ("LBE"). In some embodiments, SL operation may be limited to a licensed band and an intelligent transport spectrum ("ITS") band. In various embodiments, clear channel assessment (e.g., Type 1 channel access procedure (also named LBT Cat.4)) and short listen-before-talk ("LBT") (e.g., LBT Cat.2), and/or channel occupancy time ("COT") sharing may be used.

In some embodiments, sidelink unlicensed and/or licensed shared access operations may be used in conjunction with COT sharing via a new radio user equipment to network interface ("NR-Uu") and a new radio user equipment to user equipment interface ("NR-PC5"). In various embodiments, COT sharing may be used for downlink ("DL"), uplink ("UL"), SL, and/or between SL UEs.

As used herein, the term eNB and/or gNB may be used for a base station, but such terms may be replaced with by any other radio access node (e.g., base station ("BS"), eNB, gNB, AP, NR etc.). Moreover, various embodiments described herein may be described in relation to one type of mobile communication system (e.g., fifth generation ("5G") new radio ("NR"); however, any embodiments described herein may be applicable to other mobile communication systems (e.g., systems supporting serving cells and/or carriers configured for sidelink communication over a PC5 interface).

In certain embodiments, various aspects of COT sharing may be initiated by a gNB, a UE, and/or a SL-UE for SL transmissions.

In a first embodiment, there may be gNB-COT sharing with other UEs for performing uplink and/or sidelink transmissions. In the first embodiment, if a gNB performs LBT (e.g., according to Cat.4 (clear channel assessment ("CCA")) and acquires a channel for downlink transmission, the gNB may initiate COT sharing with a transmission to UEs for performing uplink and/or sidelink transmissions.

In some embodiments, such as for DL-COT sharing between UL and/or SL: after a gNB performs LBT (e.g., according to Cat.4 (CCA) procedure), the gNB may initiate COT sharing for SL and/or UL by transmitting an NR downlink control information ("DCI") format that is separate for both UL and SL for sharing gNB initiated COT or an indicator field in an NR DCI format providing COT sharing interface information. In such embodiments, the interface information may include information indicating uplink, sidelink, or both uplink and sidelink.

In various embodiments, such as for DL-COT sharing between UL and/or SL, an information field may be used in NR-DCI format 2_0 that provides COT sharing information to provide information related to SL transmission, such as: a COT sharing interface indicator to share COT with SL and/or UL, a slot timing offset, a symbol timing offset for starting SL transmission in a remaining channel occupancy ("CO") duration, a SL-CO duration in the remaining CO, a channel access priority class (e.g., maximum COT ("MCOT") duration), a total remaining CO duration, and/or a SL LBT type to be performed by a SL UE before SL transmission. In such embodiments, UL transmission information may include: an UL-CO duration, a slot timing offset, a symbol timing offset, and/or an UL LBT type to be performed. Moreover, in such embodiments, a slot or symbol timing offset applied may be with respect to an end of the slot or symbol where a corresponding NR-DCI format 2_0 is detected.

In certain embodiments, such as for DL-COT sharing between UL and/or SL, a different NR DCI format may be used to separately indicate gNB initiated COT sharing for UL and/or SL using an additional information field as described herein.

In some embodiments, such as for DL-COT sharing between UL and/or SL, a gNB may either transmit a group common NR DCI or a unicast DCI for sharing gNB initiated COT. In such embodiments, with the unicast DCI format for gNB COT sharing, a UE may be informed about sharing gNB COT with UL and/or SL and it may be up to a UE capability to perform simultaneous UL and SL, otherwise it may depend on a slot format indicator ("SFI") to perform UL and SL transmission in UL and SL slots. If no SFI information is available, COT sharing may depend on an indicated SL CO duration or an UL CO duration. Moreover, in such embodiments, for group common DCI for gNB COT sharing, the UE may be informed about sharing gNB COT with UL and/or SL. In such embodiments, an indicator specifying a destination group identifier ("ID") may be used in a DCI field, or information may be scrambled with the destination group ID, where the gNB COT is shared only with a certain destination group in SL.

In various embodiments, such as for DL-COT sharing between UL and/or SL, Cat 2 (e.g., short LBT) may be performed if performing SL and/or UL transmissions in a remaining CO duration.

In certain embodiments, such as for DL-COT sharing between UL and/or SL, sidelink UEs may transmit a control channel, a data channel, or any broadcast channel transmission during a remaining CO duration.

In some embodiments, such as for DL-COT sharing between UL and/or SL, sidelink UEs may not share a gNB-COT with other sidelink UEs (e.g., a sidelink UE that is the recipient of COT sharing may not further indicate sharing of the same COT with another sidelink UE).

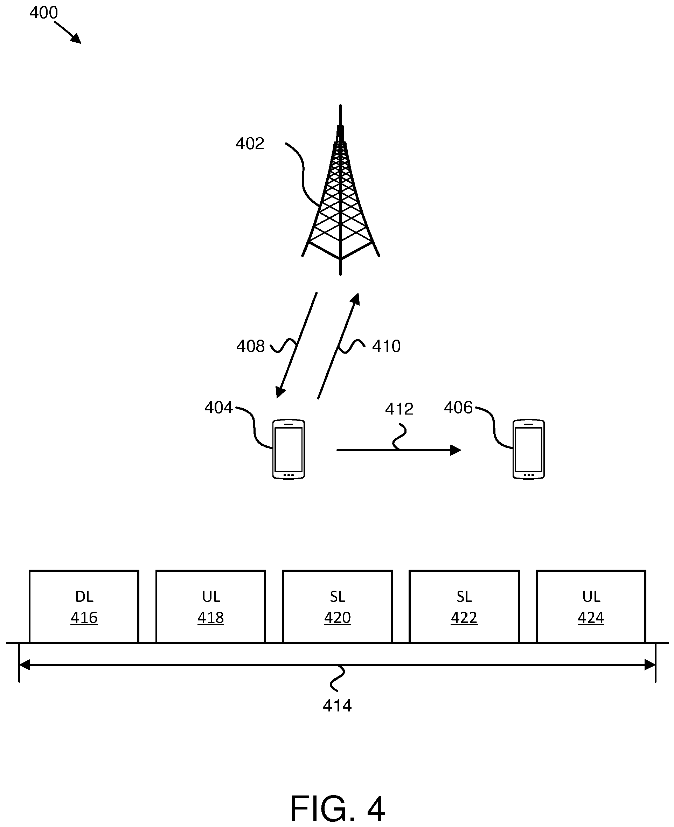

Figure 4 is a schematic block diagram 400 illustrating one embodiment of gNB initiated COT sharing with UL and/or SL. The diagram 400 illustrates a system including a gNB 402, a first UE 404, and a second UE 406. The gNB 402 transmits DL initiated COT sharing 408 for UL communications 410 and SL communications 412. The DL initiated COT sharing 408 may include a gNB-COT format 414 which includes a DL transmission 416, a first UL transmission 418, a first SL transmission 420, a second SL transmission 422, and a second UL transmission 424.

In certain embodiments, there may be a gNB scheduled SL transmission on a gNB initiated COT sharing. In such embodiments, after the gNB performs an LBT Cat 4 (e.g., CCA) procedure, the gNB may initiate COT sharing for SL transmissions in a remaining CO duration using NR-DCI containing a SL grant along with a COT sharing indicator. Moreover, in such embodiments, an NR-SL-DCI format 3_0 provides grant for SL transmission and may indicate: information about a slot timing offset or symbol timing offset for starting SL transmission in a remaining CO duration, a SL-CO sharing duration in a remaining CO, a channel access priority class (e.g., MCOT duration), a total remaining CO duration, and/or a SL LBT type to be performed by a SL UE before SL transmission. In such embodiments, a slot or symbol timing offset may be applied with respect to an end of the slot or symbol if a corresponding DCI format 2_0 is detected. Further, in such embodiments, the gNB may schedule NR DCI with a SL grant without any COT sharing indicator and a SL UE may perform LBT Cat- 4 CCA and acquire a channel for SL transmission.

In some embodiments, there may be autonomous resource selection for gNB initiated COT sharing. In such embodiments, after the gNB performs LBT Cat 4 (CCA) procedure, the gNB may initiate COT sharing for SL transmission in a remaining CO duration using NR-DCI where a SL UE may perform autonomous SL transmission using a configured grant resource, otherwise the SL UE may perform transmission based on random resource selection.

In various embodiments, an information field may be used in NR-DCI format 2_0 that provides COT sharing information to provide information related to SL transmission, such as: a COT indicator to share COT with SL and/or UL, a slot timing offset, a symbol timing offset for starting SL transmission in a remaining CO duration, a SL-CO sharing duration in the remaining CO, a channel access priority class (e.g., MCOT duration), a total remaining CO duration, and/or a SL LBT type to be performed by the SL UE before SL transmission. In such embodiments, a slot or symbol timing offset may be applied with respect to an end of the slot or symbol where a corresponding NR-DCI format 2_0 is detected.

In certain embodiments, a different NR DCI format may be used to separately indicate gNB initiated COT sharing for UL and/or SL.

In some embodiments, if a gNB transmits COT sharing information and/or its duration in DCI for sidelink purpose but there is no associated SL grant, then the UE may perform an autonomous SL transmission using a configured grant and/or using random resource selection.

In various embodiments, if a gNB provides a SL grant to a UE but does not provide information about COT sharing for SL or there is not enough remaining COT duration for SL transmission until the beginning of a sidelink slot and/or symbol configuration in SFI, a SL UE may initiate Cat 4 LBT for SL transmission or may perform simultaneous UL and SL transmissions.

In certain embodiments, if a gNB transmits a COT sharing indicator, a UE may transmit SL in UL slots or symbols depending on an NR SL-UL prioritization rule or may perform simultaneous UL and SL transmissions.

Some embodiments described herein may be applicable to other embodiments related to UE initiated COT sharing and/or SL UE initiated COT sharing with other SL UEs and relay COT sharing if a grant could also be provided by one SL UE to another SL UE.

In a second embodiment, there may be UE initiated COT Sharing - UL & SL. Moreover, in the second embodiment, the UE performs only one LBT procedure that may be either UL or SL. Further, the UE initiates sharing of channel occupancy with a gNB and/or other SL UEs (e.g., the same RAT and/or different RAT).

In various embodiments, sharing of a UE initiated channel occupancy with a gNB and/or another SL UEs may be supported such that the UE may initiate sharing COT with the gNB and/or another sidelink UEs simultaneously or in different time slots (e.g., via an SFI value) depending on whether the UE supports simultaneous UL and SL transmissions.

In certain embodiments, a UE may use first stage sidelink control information ("SCI"), second stage SCI, or a combination of both to indicate: UE COT sharing indicator to SL UEs, a slot timing offset, a symbol timing offset for starting SL transmission, a SL-CO duration in a remaining CO, a channel access priority class (e.g., MCOT duration), a remaining CO duration, a SL LBT type, a destination group ID, or a destination ID. In the present invention, a combination of the first stage SCI and the second stage SCI indicates at least one of a COT sharing indicator, a remaining duration or a channel access priority class. In such embodiments, SCI formats may be broadcast, groupcast, or unicast depending on whether the UE would like to share the COT on a one to one basis or one to many basis with SL UEs.

In some embodiments, for UL-DL-SL: a UE may transmit configured grant ("CG") uplink control information ("UCI") ("CG-UCI") at the end of an UL CO to share a UE initiated COT with a gNB where the CG-UCI may contain a DL CO sharing duration in the remaining CO duration of the UE initiated COT and at the same time may transmit SCI in SL to share the UE initiated COT with other SL UEs where SCI contains a COT sharing indicator and either a SL timing offset, a row in a table, a table ID informing about a start of SL transmission, and/or a SL CO sharing duration in the remaining CO duration of the UE initiated COT.

In various embodiments, if SCI is not transmitted due to an inability to simultaneous transmit UL-SL, then the UE may not share a UE initiated COT with other UEs.

In certain embodiments, for UL-SL-DL: a UE may transmit a SL-CO sharing duration in CG-UCI or an end of SL transmission so that a gNB may start DL transmission immediately after SL channel occupancy is finished.

In some embodiments, for SL-DL-UL: a UE may transmit in a CG-UCI information about a DL CO sharing duration along with the starting of a DL transmission timing offset, a table index, and/or a row number.

In various embodiments, for SL-UL-DL: at an end of an UL CO, a UE initiated COT may be shared with a gNB and a CG UCI may contain a DL CO sharing duration that may be a remaining CO duration.

In certain embodiments, a UE performs multiple LBTs for UL and/or SL on a set of panels and/or beams simultaneously (e.g., in parallel, concurrently) or in a time domain manner (e.g., sequentially) for UL and/or SL transmissions. In such embodiments, sharing of UE initiated channel occupancy may be restricted only within an interface, panels, and/or beam that initiated the LBT.

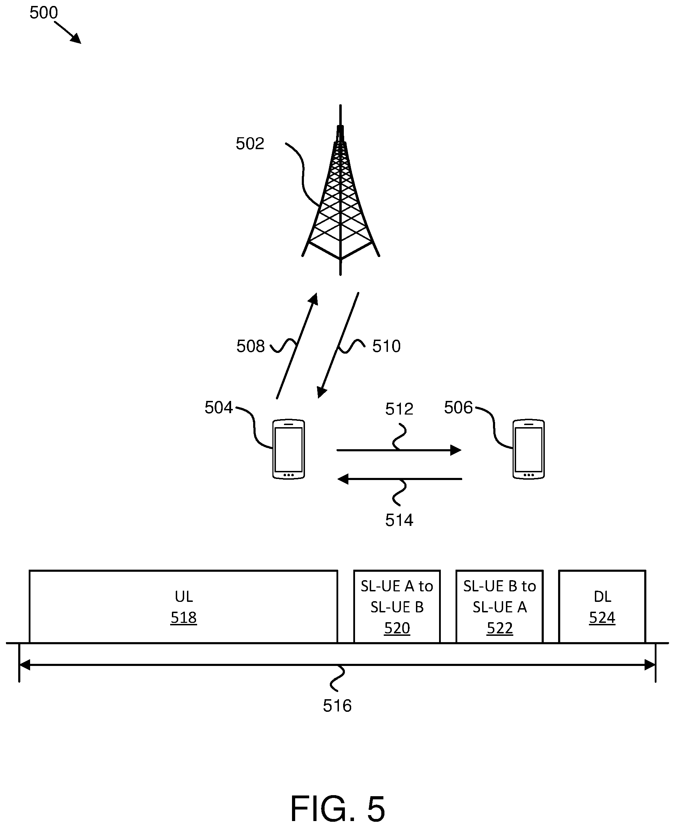

Figure 5 is a schematic block diagram 500 illustrating one embodiment of UE initiated COT sharing with a gNB and other SL UEs. The diagram 500 illustrates a system including a gNB 502, a first UE 504 (UE A), and a second UE 506 (UE B). The first UE 504 transmits UL initiated COT sharing 508 for DL communications 510 and SL communications 512 and 514. The UL initiated COT sharing 508 may include a UE-COT format 516 which includes an UL transmission 518, a SL-UE A to SL-UE B transmission 520, a SL-UE B to SL-UE A transmission 522, and a DL transmission 524.

In a third embodiment, there may be UE to UE COT sharing and/or SL COT sharing. In the third embodiment, a UE A may perform LBT Cat.4 (CCA) and may acquire a channel for sidelink transmission. In such an embodiment, UE A may initiate SL COT sharing with other SL UEs (e.g., UE B) for performing sidelink transmissions and SCI indicates a COT sharing indicator and/or includes an explicit restriction for the SL transmission among SL UEs.

In some embodiments, an indicator may be used in a first or second stage SCI specifying a SL transmission restriction among SL UEs. In one example, a UE may transmit physical sidelink feedback channel ("PSFCH") feedback in the remaining CO duration only to the UE that initiated the channel occupancy and, in another example, the UE may transmit a physical sidelink control channel ("PSCCH") transmission and/or a physical sidelink shared channel ("PSSCH") transmission in the remaining CO only to the UE that initiated the channel occupancy.

In various embodiments, if a restriction indicator is not present and/or is zero, then SL transmission may be possible with all SL UEs that are part of a destination group ID and/or destination ID. In one example, a UE A may transmit PSFCH feedback (e.g., originating from PSSCH belonging to the destination group ID and/or destination ID specified in the SCI) in the remaining CO duration to all SL UEs that are part of the destination group ID as long as the feedback contains transmissions to the UE that initiated the channel occupancy. In another example, a UE A may transmit a PSSCH transmission in a remaining CO to all SL UEs that are part of the destination group ID as long as the transmission contains transmissions to the SL UE that initiated the channel occupancy.

In certain embodiments, a UE A may use either a first stage SCI, a second stage SCI, or a combination of both to indicate: a COT sharing indicator to other SL UEs, a slot timing offset, a symbol timing offset for starting SL transmission and/or a row in a table and/or a table ID informing about a start of SL transmission and/or SL CO sharing duration in a remaining CO duration of a UE initiated COT for each SL UE, a channel access priority class (e.g., MCOT duration), a remaining CO duration, a SL LBT type, a destination group ID, and/or a destination ID. In the present invention, a combination of the first stage SCI and the second stage SCI indicates at least one of a COT sharing indicator, a remaining duration or a channel access priority class. In such embodiments, SCI formats may be broadcast, groupcast, or unicast depending on the UE about whether it would like to share the COT with one to one or one to many SL UEs. The transmission of a COT sharing indicator in SCI may be x slots before the start of SL transmission (e.g., considering UE processing time requirements).

In some embodiments, if a UE transmit a COT sharing and/or its duration in SCI for sidelink purposes, but there is no associated SL grant, then the UE may transmit using a configured grant, using random resource selection, or combination thereof.

In various embodiments, if a UE receives a COT sharing indicator but does not receive an associated grant, the UE may transmit a scheduling resource ("SR") to a gNB within a remaining CO duration or may initiate a new COT for the transmission of the SR.

In certain embodiments, a UE that initiates COT sharing may provide a SL grant for other UEs transmissions (e.g., UE B to UE A, UE C to UE A, UE D to UE A) and a COT sharing indicator in the same SCI, in separate SCI, or in the second stage SCI.

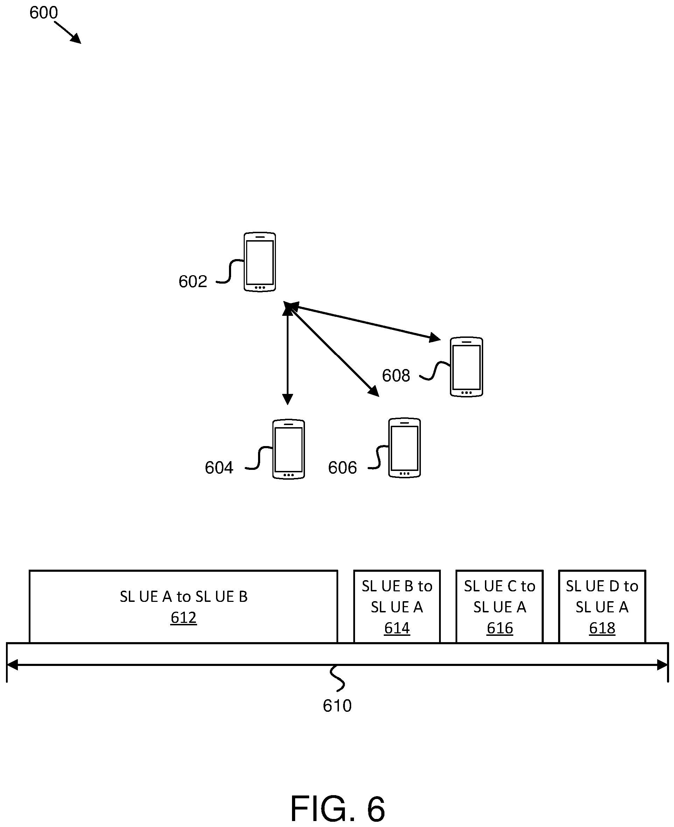

Figure 6 is a schematic block diagram 600 illustrating one embodiment of SL UE initiated COT sharing. The diagram 600 illustrates a system including a first UE 602 (UE A), a second UE 604 (UE B), a third UE 606 (UE C), and a fourth UE 608 (UE D). The first UE 602 transmits SL UE initiated COT sharing 610 with the second UE 604, the third UE 606, and the fourth UE 608. The SL UE initiated COT sharing 610 may include a SL UE A to SL UE B transmission 612, a SL UE B to SL UE A transmission 614, a SL UE C to SL UE A transmission 616, and a SL UE D to SL UE A transmission 618.

In a fourth embodiments, SL COT sharing may be performed in a relay environment. In the fourth embodiment, a UE A performs LBT Cat.4 (CCA), acquires a channel for sidelink transmission, and the UE A may initiate SL COT sharing with other SL UEs for performing sidelink transmission if SCI indicates a COT sharing indicator and/or includes an explicit restriction on the usage of UE A's COT sharing in which a number of hops, a depth of sharing hierarchy, and/or nested COT sharing may be limited and specified for sharing as part of the COT sharing indicator.

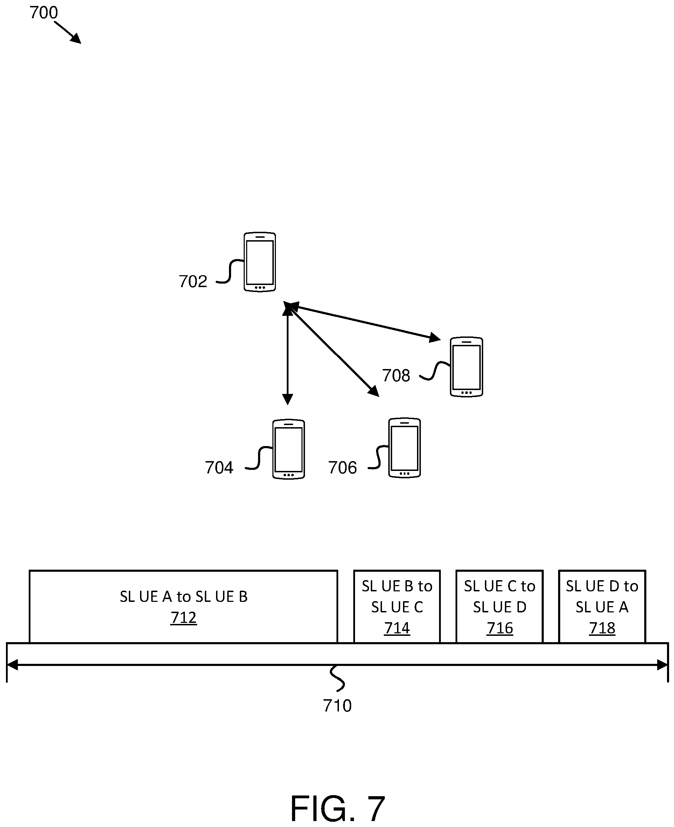

In some embodiments, SCI contains an information field (e.g., first SCI, second SCI, or a combination of both) apart from a SL COT sharing indicator and timing offset. The information field may provide information related to nested COT sharing and a number of devices used for nested COT sharing (e.g., as shown in Figure 7).

Figure 7 is a schematic block diagram 700 illustrating one embodiment of SL COT sharing in a relay environment. The diagram 700 illustrates a system including a first UE 702 (UE A), a second UE 704 (UE B), a third UE 706 (UE C), and a fourth UE 708 (UE D). The first UE 702 transmits SL UE initiated COT sharing 710 with the second UE 704, the third UE 706, and the fourth UE 708. The SL UE initiated COT sharing 710 may include a SL UE A to SL UE B transmission 712, a SL UE B to SL UE C transmission 714, a SL UE C to SL UE D transmission 716, and a SL UE D to SL UE A transmission 718.

In various embodiments, if nested sharing is disabled: UE A shares COT with UE B so that UE B may transmit to UE A and UE C but UE B is NOT allowed to share the same and/or remaining COT duration initiated by UE A further with UE C so that UE C may transmit to any of the UEs in the group.

In certain embodiments, if nested sharing is enabled (e.g., allowed): UE A shares COT with UE B so that UE B may transmit to UE A and UE C and UE B are allowed to share the same and/or remaining COT duration initiated by UE A further with UE C so that UE C may transmit to any of the UEs in the group. All UEs may perform Cat 2 (short LBT) before any SL transmission.

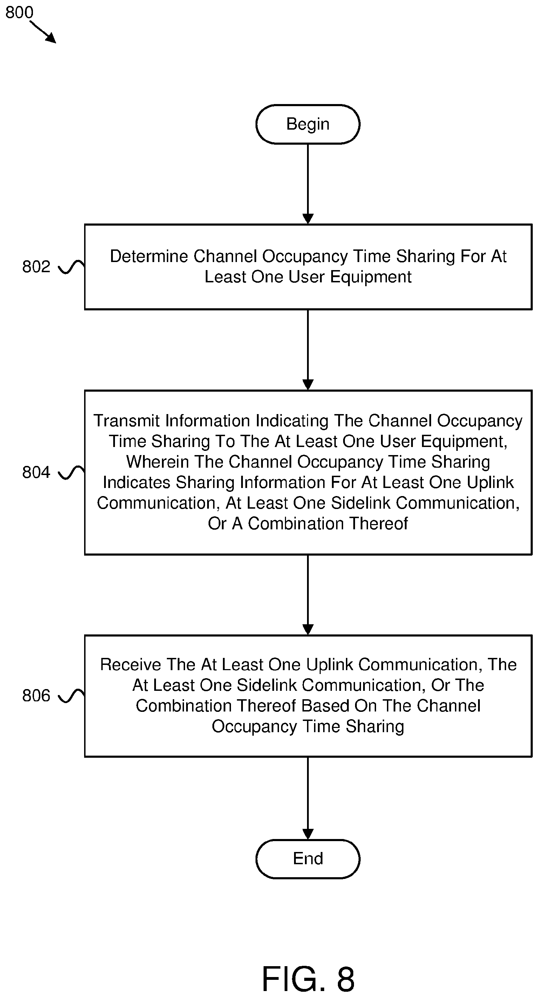

Figure 8 is a flow chart diagram illustrating one embodiment of a method 800 for channel occupancy time sharing. In some embodiments, the method 800 is performed by an apparatus, such as the network unit 104. In certain embodiments, the method 800 may be performed by a processor executing program code, for example, a microcontroller, a microprocessor, a CPU, a GPU, an auxiliary processing unit, a FPGA, or the like.

In various embodiments, the method 800 includes determining 802 channel occupancy time sharing for at least one user equipment. In some embodiments, the method 800 includes transmitting 804 information indicating the channel occupancy time sharing to the at least one user equipment. The channel occupancy time sharing indicates sharing information for at least one uplink communication, at least one sidelink communication, or a combination thereof. In certain embodiments, the method 800 includes receiving 806 the at least one uplink communication, the at least one sidelink communication, or the combination thereof based on the channel occupancy time sharing.

In certain embodiments, transmitting the information indicating the channel occupancy time sharing comprises transmitting an interface field in a downlink control information format that indicates the channel occupancy time sharing for the at least one uplink communication, the at least one sidelink communication, or the combination thereof. In some embodiments, the downlink control information format further comprises a duration for the channel occupancy time sharing for the at least one uplink communication, the at least one sidelink communication, or the combination thereof. In various embodiments, the downlink control information format comprises a unicast downlink control information format to indicate the channel occupancy time sharing for the at least one uplink communication, the at least one sidelink communication, or the combination thereof.

In one embodiment, a sidelink grant in the downlink control information format comprises a destination identifier that indicates the at least one user equipment that is to use the channel occupancy time sharing. In certain embodiments, a sidelink grant in downlink control information initiates the channel occupancy time sharing and transmits a duration for the channel occupancy time sharing. In some embodiments, a sidelink grant in downlink control information contains a field to inform a recipient of the channel occupancy time sharing information to indicate further sharing of the same channel occupancy time with another user equipment performing sidelink communication. In various embodiments, the at least one user equipment autonomously performs sidelink transmissions based on the channel occupancy time sharing and a duration.

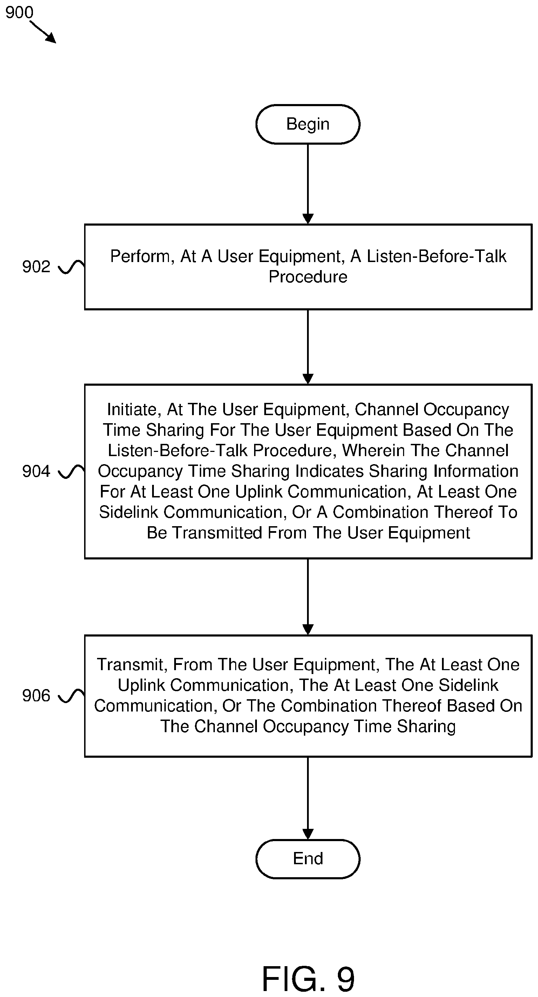

Figure 9 is a flow chart diagram illustrating one embodiment of a method 900 for channel occupancy time sharing. In some embodiments, the method 900 is performed by an apparatus, such as the remote unit 102. In certain embodiments, the method 900 may be performed by a processor executing program code, for example, a microcontroller, a microprocessor, a CPU, a GPU, an auxiliary processing unit, a FPGA, or the like.

In various embodiments, the method 900 includes performing 902 a listen-before-talk procedure. In some embodiments, the method 900 includes initiating 904 channel occupancy time sharing for the user equipment based on the listen-before-talk procedure. The channel occupancy time sharing indicates sharing information for at least one uplink communication, at least one sidelink communication, or a combination thereof to be transmitted from the user equipment. In certain embodiments, the method 900 includes transmitting 906 the at least one uplink communication, the at least one sidelink communication, or the combination thereof based on the channel occupancy time sharing.

In certain embodiments, the method 900 further comprises transmitting a first stage sidelink control information, a second stage sidelink control information, or a combination thereof indicating a channel occupancy time sharing indicator, a remaining duration, a channel access priority class, or some combination thereof. In some embodiments, the first stage sidelink control information, the second stage sidelink control information, or the combination thereof is transmitted using a broadcast transmission, a groupcast transmission, or a unicast transmission. In various embodiments, the first stage sidelink control information, the second stage sidelink control information, or the combination thereof comprises an indicator that indicates a restriction of user equipments that are to use the channel occupancy time sharing.

In one embodiment, the channel occupancy time sharing applies to user equipments that share a destination group identifier, a destination identifier, or a combination thereof. In certain embodiments, the sharing information comprises information indicating whether nested channel occupancy time sharing is enabled. In some embodiments, the first stage sidelink control information, the second stage sidelink control information, or the combination thereof indicates a number of nested channel occupancy time sharing devices.

In various embodiments, the method 900 further comprises transmitting a physical sidelink control channel transmission, a physical sidelink shared channel transmission, or a combination thereof in a remaining channel occupancy only to a device that initiated the channel occupancy sharing. In one embodiment, the method further comprises transmitting a physical sidelink control channel transmission, a physical sidelink shared channel transmission, or a combination thereof in a remaining channel occupancy to any device within a destination identifier.

In one embodiment, a method comprises: determining channel occupancy time sharing for at least one user equipment; transmitting information indicating the channel occupancy time sharing to the at least one user equipment, wherein the channel occupancy time sharing indicates sharing information for at least one uplink communication, at least one sidelink communication, or a combination thereof; and receiving the at least one uplink communication, the at least one sidelink communication, or the combination thereof based on the channel occupancy time sharing.

In certain embodiments, transmitting the information indicating the channel occupancy time sharing comprises transmitting an interface field in a downlink control information format that indicates the channel occupancy time sharing for the at least one uplink communication, the at least one sidelink communication, or the combination thereof.

In some embodiments, the downlink control information format further comprises a duration for the channel occupancy time sharing for the at least one uplink communication, the at least one sidelink communication, or the combination thereof.

In various embodiments, the downlink control information format comprises a unicast downlink control information format to indicate the channel occupancy time sharing for the at least one uplink communication, the at least one sidelink communication, or the combination thereof.

In one embodiment, a sidelink grant in the downlink control information format comprises a destination identifier that indicates the at least one user equipment that is to use the channel occupancy time sharing.

In certain embodiments, a sidelink grant in downlink control information initiates the channel occupancy time sharing and transmits a duration for the channel occupancy time sharing.

In some embodiments, a sidelink grant in downlink control information contains a field to inform a recipient of the channel occupancy time sharing information to indicate further sharing of the same channel occupancy time with another user equipment performing sidelink communication.

In various embodiments, the at least one user equipment autonomously performs sidelink transmissions based on the channel occupancy time sharing and a duration.

In one embodiment, an apparatus comprises: a processor that determines channel occupancy time sharing for at least one user equipment; a transmitter that transmits information indicating the channel occupancy time sharing to the at least one user equipment, wherein the channel occupancy time sharing indicates sharing information for at least one uplink communication, at least one sidelink communication, or a combination thereof; and a receiver that receives the at least one uplink communication, the at least one sidelink communication, or the combination thereof based on the channel occupancy time sharing.

In certain embodiments, transmitting the information indicating the channel occupancy time sharing comprises transmitting an interface field in a downlink control information format that indicates the channel occupancy time sharing for the at least one uplink communication, the at least one sidelink communication, or the combination thereof.

In some embodiments, the downlink control information format further comprises a duration for the channel occupancy time sharing for the at least one uplink communication, the at least one sidelink communication, or the combination thereof.

In various embodiments, the downlink control information format comprises a unicast downlink control information format to indicate the channel occupancy time sharing for the at least one uplink communication, the at least one sidelink communication, or the combination thereof.

In one embodiment, a sidelink grant in the downlink control information format comprises a destination identifier that indicates the at least one user equipment that is to use the channel occupancy time sharing.

In certain embodiments, a sidelink grant in downlink control information initiates the channel occupancy time sharing and transmits a duration for the channel occupancy time sharing.

In some embodiments, a sidelink grant in downlink control information contains a field to inform a recipient of the channel occupancy time sharing information to indicate further sharing of the same channel occupancy time with another user equipment performing sidelink communication.

In various embodiments, the at least one user equipment autonomously performs sidelink transmissions based on the channel occupancy time sharing and a duration.

In one embodiment, a method comprises: performing, at a user equipment, a listen-before-talk procedure; initiating, at the user equipment, channel occupancy time sharing for the user equipment based on the listen-before-talk procedure, wherein the channel occupancy time sharing indicates sharing information for at least one uplink communication, at least one sidelink communication, or a combination thereof to be transmitted from the user equipment; and transmitting, from the user equipment, the at least one uplink communication, the at least one sidelink communication, or the combination thereof based on the channel occupancy time sharing.

In certain embodiments, the method further comprises transmitting a first stage sidelink control information, a second stage sidelink control information, or a combination thereof indicating a channel occupancy time sharing indicator, a remaining duration, a channel access priority class, or some combination thereof.

In some embodiments, the first stage sidelink control information, the second stage sidelink control information, or the combination thereof is transmitted using a broadcast transmission, a groupcast transmission, or a unicast transmission.

In various embodiments, the first stage sidelink control information, the second stage sidelink control information, or the combination thereof comprises an indicator that indicates a restriction of user equipments that are to use the channel occupancy time sharing.

In one embodiment, the channel occupancy time sharing applies to user equipments that share a destination group identifier, a destination identifier, or a combination thereof.

In certain embodiments, the sharing information comprises information indicating whether nested channel occupancy time sharing is enabled.

In some embodiments, the first stage sidelink control information, the second stage sidelink control information, or the combination thereof indicates a number of nested channel occupancy time sharing devices.

In various embodiments, the method further comprises transmitting a physical sidelink control channel transmission, a physical sidelink shared channel transmission, or a combination thereof in a remaining channel occupancy only to a device that initiated the channel occupancy sharing.

In one embodiment, the method further comprises transmitting a physical sidelink control channel transmission, a physical sidelink shared channel transmission, or a combination thereof in a remaining channel occupancy to any device within a destination identifier.

In one embodiment, an apparatus comprises a user equipment, the apparatus further comprises: a processor that: performs a listen-before-talk procedure; and initiates channel occupancy time sharing for the user equipment based on the listen-before-talk procedure, wherein the channel occupancy time sharing indicates sharing information for at least one uplink communication, at least one sidelink communication, or a combination thereof to be transmitted from the user equipment; and a transmitter that transmits the at least one uplink communication, the at least one sidelink communication, or the combination thereof based on the channel occupancy time sharing.

In certain embodiments, the transmitter transmits a first stage sidelink control information, a second stage sidelink control information, or a combination thereof indicating a channel occupancy time sharing indicator, a remaining duration, a channel access priority class, or some combination thereof.

In some embodiments, the first stage sidelink control information, the second stage sidelink control information, or the combination thereof is transmitted using a broadcast transmission, a groupcast transmission, or a unicast transmission.

In various embodiments, the first stage sidelink control information, the second stage sidelink control information, or the combination thereof comprises an indicator that indicates a restriction of user equipments that are to use the channel occupancy time sharing.

In one embodiment, the channel occupancy time sharing applies to user equipments that share a destination group identifier, a destination identifier, or a combination thereof.

In certain embodiments, the sharing information comprises information indicating whether nested channel occupancy time sharing is enabled.

In some embodiments, the first stage sidelink control information, the second stage sidelink control information, or the combination thereof indicates a number of nested channel occupancy time sharing devices.

In various embodiments, the transmitter transmits a physical sidelink control channel transmission, a physical sidelink shared channel transmission, or a combination thereof in a remaining channel occupancy only to a device that initiated the channel occupancy sharing.

In one embodiment, the transmitter transmits a physical sidelink control channel transmission, a physical sidelink shared channel transmission, or a combination thereof in a remaining channel occupancy to any device within a destination identifier.

Embodiments may be practiced in other specific forms. The described embodiments are to be considered in all respects only as illustrative and not restrictive. The scope of the invention is, therefore, indicated by the appended claims rather than by the foregoing description.

## Claims

1. A method (900) performed by a user equipment, UE, (102), the method comprising:
performing (902) a listen-before-talk, LBT, procedure;
initiating (904) channel occupancy time, COT, sharing for the UE (102) based on the LBT procedure, wherein the COT sharing indicates sharing information for at least one of uplink communication or at least one sidelink communication to be transmitted from the UE (102);
transmitting a first stage sidelink control information, SCI, and a second stage SCI, wherein a combination of the first stage SCI and the second stage SCI indicates at least one of a COT sharing indicator, a remaining duration or a channel access priority class; and
transmitting (906) the at least one uplink communication or the at least one sidelink communication based on the COT sharing.

2. The method (900) of claim 1, wherein the first stage SCI and the second stage SCI are transmitted using at least one of a broadcast transmission, a groupcast transmission or a unicast transmission.

3. The method (900) of claim 1, wherein the first stage SCI, the second stage SCI, or the combination thereof comprises an indicator that indicates a restriction of UEs that are to use the COT sharing.

4. The method (900) of claim 1, wherein the COT sharing applies to UEs that share at least one of a destination group identifier or a destination identifier.

5. The method (900) of claim 1, comprising transmitting at least one of a physical sidelink control channel, PSCCH, transmission or a physical sidelink shared channel, PSSCH, transmission in a remaining channel occupancy only to a device that initiated the channel occupancy sharing.

6. The method (900) of claim 1, comprising transmitting at least one of a PSCCH transmission or a PSSCH transmission in a remaining channel occupancy to any device within a destination identifier.

7. A user equipment, UE, (102) for wireless communication, the UE (102) comprising:
at least one memory (204); and
at least one processor (202) coupled with the at least one memory (204) and configured to cause the UE (102) to:
perform (902) a listen-before-talk, LBT, procedure;
initiate (904) channel occupancy time, COT, sharing for the UE (102) based on the LBT procedure, wherein the COT sharing indicates sharing information for at least one of uplink communication or at least one sidelink communication to be transmitted from the UE (102);
transmit a first stage sidelink control information, SCI, and a second stage SCI, wherein a combination of the first stage SCI and the second stage SCI indicates at least one of a COT sharing indicator, a remaining duration or a channel access priority class; and
transmit (906) the at least one uplink communication or the at least one sidelink communication based on the COT sharing.

8. The UE (102) of claim 7, wherein the at least one processor (202) is configured to cause the UE (102) transmit the first stage SCI and the second stage SCI using at least one of a broadcast transmission, a groupcast transmission or a unicast transmission.

9. The UE (102) of claim 7, wherein the first stage SCI, the second stage SCI, or the combination thereof comprises an indicator that indicates a restriction of UEs that are to use the COT sharing.

10. The UE (102) of claim 7, wherein the COT sharing applies to UEs that share at least one of a destination group identifier or a destination identifier.

11. The UE (102) of claim 7, wherein the at least one processor (202) is configured to cause the UE (102) transmit at least one of a physical sidelink control channel, PSCCH, transmission or a physical sidelink shared channel, PSSCH, transmission in a remaining channel occupancy only to a device that initiated the channel occupancy sharing.

12. The UE (102) of claim 7, wherein the at least one processor (202) is configured to cause the UE (102) transmit at least one of a PSCCH transmission or a PSSCH transmission in a remaining channel occupancy to any device within a destination identifier.

13. A processor (202) for a user equipment, UE, (102) for wireless communication, the processor (202) being configured to cause the UE (102) to:
perform (902) a listen-before-talk, LBT, procedure;
initiate (904) channel occupancy time, COT, sharing for the UE (102) based on the LBT procedure, wherein the COT sharing indicates sharing information for at least one of uplink communication or at least one sidelink communication to be transmitted from the UE (102);
transmit a first stage sidelink control information, SCI, and a second stage SCI, wherein a combination of the first stage SCI and the second stage SCI indicates at least one of a COT sharing indicator, a remaining duration or a channel access priority class; and
transmit (906) the at least one uplink communication or the at least one sidelink communication based on the COT sharing.

## Patentansprüche

1. Von einem Endgerät (102) ausgeführtes Verfahren (900), wobei das Verfahren umfasst:
Ausführen (902) eines Listen-Before-Talk-(LBT-)Vorgangs;
Einleiten (904) des Channel-Occupancy-Time-(COT-)Sharings für das Endgerät (102) auf der Basis des LBT-Vorgangs, wobei das COT-Sharing Sharing-Informationen für wenigstens eine Uplink-Kommunikation oder wenigstens eine Sidelink-Kommunikation zum Senden vom Endgerät (102) angibt;
Senden einer Sidelink Control Information (SCI) der ersten Stufe und einer SCI der zweiten Stufe, wobei eine Kombination aus SCI erster Stufe und SCI zweiter Stufe wenigstens ein Element der Gruppe umfassend einen COT-Sharing-Indikator, eine Restdauer oder eine Kanalzugriffs-Prioritätsklasse angibt; und
Senden (906) der wenigstens einen Uplink-Kommunikation oder der wenigstens einen Sidelink-Kommunikation basierend auf dem COT-Sharing.

2. Verfahren (900) nach Anspruch 1, wobei die SCI der ersten Stufe und die SCI der zweiten Stufe unter Verwendung von wenigstens einem Element der Gruppe umfassend Rundumsenden, Groupcast-Senden und Unicast-Senden gesendet werden.

3. Verfahren (900) nach Anspruch 1, wobei die SCI der ersten Stufe, die SCI der zweiten Stufe oder eine Kombination daraus einen Indikator umfasst, der eine Beschränkung von Endgeräten angibt, die für das COT-Sharing vorgesehen sind.

4. Verfahren (900) nach Anspruch 1, wobei das COT-Sharing für Endgeräte gilt, die einen Zielgruppenidentifizierer oder/und einen Zielidentifizierer teilen.

5. Verfahren (900) nach Anspruch 1, umfassend das Senden einer Physical-Sidelink-Control-Channel-(PSCCH-)Sendung oder/und einer Physical-Sidelink-Shared-Channel-(PSSCH-)Sendung in einer Restkanalbelegung nur an eine Vorrichtung, die das Kanalbelegungs-Sharing eingeleitet hat.

6. Verfahren (900) nach Anspruch 1, umfassend das Senden einer PSCCH-Sendung oder/und einer PSSCH-Sendung in einer Restkanalbelegung an ein beliebiges Gerät innerhalb eines Zielidentifizierers.

7. Endgerät (102) zur drahtlosen Kommunikation, wobei das Endgerät (102) umfasst:
wenigstens einen Speicher (204); und
wenigstens einen Prozessor (202), gekoppelt mit dem wenigstens einen Speicher (204) und ausgebildet zum Veranlassen des Endgeräts (102) zum:
Ausführen (902) eines Listen-Before-Talk-(LBT-)Vorgangs;
Einleiten (904) des Channel-Occupancy-Time-(COT-)Sharings für das Endgerät (102) auf der Basis des LBT-Vorgangs, wobei das COT-Sharing Sharing-Informationen für wenigstens eine Uplink-Kommunikation oder wenigstens eine Sidelink-Kommunikation zum Senden vom Endgerät (102) angibt;
Senden einer Sidelink Control Information (SCI) der ersten Stufe und einer SCI der zweiten Stufe, wobei eine Kombination aus SCI erster Stufe und SCI zweiter Stufe wenigstens ein Element der Gruppe umfassend einen COT-Sharing-Indikator, eine Restdauer oder eine Kanalzugriffs-Prioritätsklasse angibt; und
Senden (906) der wenigstens einen Uplink-Kommunikation oder der wenigstens einen Sidelink-Kommunikation basierend auf dem COT-Sharing.

8. Endgerät (102) nach Anspruch 7, wobei der wenigstens eine Prozessor (202) zum Veranlassen des Endgeräts (102) zum Senden der SCI der ersten Stufe und der SCI der zweiten Stufe unter Verwendung von wenigstens einem Element der Gruppe umfassend Rundumsenden, Groupcast-Senden und Unicast-Senden ausgebildet ist.

9. Endgerät (102) nach Anspruch 7, wobei die SCI der ersten Stufe, die SCI der zweiten Stufe oder eine Kombination daraus einen Indikator umfasst, der eine Beschränkung von Endgeräten angibt, die für das COT-Sharing vorgesehen sind.

10. Endgerät (102) nach Anspruch 7, wobei das COT-Sharing für Endgeräte gilt, die einen Zielgruppenidentifizierer oder/und einen Zielidentifizierer teilen.

11. Endgerät (102) nach Anspruch 7, wobei der wenigstens eine Prozessor (202) zum Veranlassen des Endgeräts (102) zum Senden einer Physical-Sidelink-Control-Channel-(PSCCH-)Sendung oder/und einer Physical-Sidelink-Shared-Channel-(PSSCH-)Sendung in einer Restkanalbelegung nur an eine Vorrichtung, die das Kanalbelegungs-Sharing eingeleitet hat, ausgebildet ist.

12. Endgerät (102) nach Anspruch 7, wobei der wenigstens eine Prozessor (202) zum Veranlassen des Endgeräts (102) zum Senden einer PSCCH-Sendung oder/und einer PSSCH-Sendung in einer Restkanalbelegung an eine beliebige Vorrichtung innerhalb eines Zielidentifizierers ausgebildet ist.

13. Prozessor (202) für ein Endgerät (102) zur drahtlosen Kommunikation, wobei der Prozessor (202) ausgebildet ist zum Veranlassen des Endgeräts (102) zum:
Ausführen (902) eines Listen-Before-Talk-(LBT-)Vorgangs;
Einleiten (904) des Channel-Occupancy-Time-(COT-)Sharings für das Endgerät (102) auf der Basis des LBT-Vorgangs, wobei das COT-Sharing Sharing-Informationen für wenigstens eine Uplink-Kommunikation oder wenigstens eine Sidelink-Kommunikation zum Senden vom Endgerät (102) angibt;
Senden einer Sidelink Control Information (SCI) der ersten Stufe und einer SCI der zweiten Stufe, wobei eine Kombination aus SCI erster Stufe und SCI zweiter Stufe wenigstens ein Element der Gruppe umfassend einen COT-Sharing-Indikator, eine Restdauer oder eine Kanalzugriffs-Prioritätsklasse angibt; und
Senden (906) der wenigstens einen Uplink-Kommunikation oder der wenigstens einen Sidelink-Kommunikation basierend auf dem COT-Sharing.

## Revendications

1. Procédé (900) mis en œuvre par un équipement utilisateur (UE) (102), le procédé comprenant :
l'exécution (902) d'une procédure d'écoute avant transmission (LBT) ;
l'initiation (904) d'un partage du temps d'occupation du canal (COT) pour l'UE (102) sur la base de la procédure LBT, dans lequel le partage du COT indique des informations de partage pour au moins une communication de liaison montante ou au moins une communication sidelink devant être transmise depuis l'UE (102) ;
la transmission d'informations de commande sidelink de premier niveau, SCI, et d'informations de commande sidelink de second niveau, SCI, une combinaison des informations SCI de premier niveau et des informations SCI de second niveau indiquant au moins l'un des éléments suivants : un indicateur de partage COT, une durée restante ou une classe de priorité d'accès au canal ; et
la transmission (906) de l'au moins une communication de liaison montante ou de l'au moins une communication sidelink sur la base du partage COT.

2. Procédé (900) selon la revendication 1, dans lequel les SCI de premier niveau et les SCI de second niveau sont transmises en utilisant au moins l'une des transmissions suivantes : une transmission de diffusion, une transmission de diffusion de groupe ou une transmission unicast.

3. Procédé (900) selon la revendication 1, dans lequel les SCI de premier niveau, les SCI de second niveau ou leur combinaison comprennent un indicateur indiquant une restriction des UE devant utiliser le partage COT.

4. Procédé (900) selon la revendication 1, dans lequel le partage COT s'applique à des UE partageant au moins l'un des éléments suivants : un identifiant de groupe de destination ou un identifiant de destination.

5. Procédé (900) selon la revendication 1, comprenant la transmission d'au moins l'une d'une des transmissions suivantes : une transmission de canal de commande sidelink physique, PSCCH, ou une transmission de canal partagé sidelink physique, PSSCH, dans un temps d'occupation de canal restant, uniquement vers un dispositif ayant initié le partage d'occupation du canal.

6. Procédé (900) selon la revendication 1, comprenant la transmission d'au moins l'une des transmissions suivantes : une transmission PSCCH ou une transmission PSSCH dans un temps d'occupation de canal restant, à tout dispositif associé à un identifiant de destination.

7. Équipement utilisateur, UE, (102) destiné à une communication sans fil, l'UE (102) comprenant :
au moins une mémoire (204) ; et
au moins un processeur (202) couplé à ladite au moins une mémoire (204) et configuré pour que l'UE (102) :
exécute (902) une procédure d'écoute avant transmission, LBT ;
initie (904) un partage du temps d'occupation de canal (COT) pour l'UE (102) sur la base de la procédure LBT, le partage COT indiquant des informations de partage pour au moins une communication de liaison montante ou au moins une communication sidelink à transmettre depuis l'UE (102) ;
transmette des informations de commande sidelink (SCI) de premier niveau et des informations SCI de second niveau, une combinaison des informations SCI de premier niveau et des informations SCI de second niveau indiquant au moins l'un des éléments suivants : un indicateur de partage COT, une durée restante ou une classe de priorité d'accès au canal ; et
transmette (906) l'au moins une communication de liaison montante ou l'au moins une communication sidelink sur la base du partage COT.

8. UE (102) selon la revendication 7, dans laquelle l'au moins un processeur (202) est configuré pour que l'UE (102) transmette les SCI de premier niveau et les SCI de second niveau en utilisant au moins l'une des transmissions suivantes : une transmission de diffusion, une transmission de diffusion de groupe ou une transmission unicast.

9. UE (102) selon la revendication 7, dans laquelle les SCI de premier niveau, les SCI de second niveau, ou leur combinaison comprennent un indicateur indiquant une restriction des UE devant utiliser le partage COT.

10. UE (102) selon la revendication 7, dans lequel le partage COT s'applique à des UE partageant au moins l'un des éléments suivants : un identifiant de groupe de destination ou un identifiant de destination.

11. UE (102) selon la revendication 7, dans lequel l'au moins un processeur (202) est configuré pour que l'UE (102) transmette au moins l'une des transmissions suivantes : une transmission de canal de commande sidelink physique, PSCCH, ou une transmission de canal partagé sidelink physique, PSSCH, dans un temps d'occupation de canal restant, uniquement vers un dispositif ayant initié le partage d'occupation de canal.

12. UE (102) selon la revendication 7, dans lequel l'au moins un processeur (202) est configuré pour que l'UE (102) transmette au moins l'une des transmissions suivantes : une transmission PSCCH ou une transmission PSSCH, dans un temps d'occupation de canal restant à tout dispositif associé à un identifiant de destination.

13. Processeur (202) destiné à un équipement utilisateur, UE, (102) pour une communication sans fil, le processeur (202) étant configuré pour que l'UE (102) :
exécute (902) une procédure d'écoute avant transmission, LBT ;
initie (904) un partage du temps d'occupation de canal (COT) pour l'UE (102) sur la base de la procédure LBT, le partage COT indiquant des informations de partage pour au moins une communication de liaison montante ou au moins une communication sidelink devant être transmise depuis l'UE (102) ;
transmette des informations de commande sidelink (SCI) de premier niveau et des informations SCI de second niveau, une combinaison des informations SCI de premier niveau et des informations SCI de second niveau indiquant au moins l'un des éléments suivants : un indicateur de partage COT, une durée restante ou une classe de priorité d'accès au canal ; et
transmette (906) l'au moins une communication de liaison montante ou l'au moins une communication sidelink sur la base du partage COT.
